Europäisches Patentamt

European Patent Office

Office européen des brevets

(19)

(11) Veröffentlichungsnummer: **0 222 180**
**B1**

(12) **EUROPÄISCHE PATENTSCHRIFT**

(45) Veröffentlichungstag der Patentschrift:
01.08.90

(21) Anmeldenummer: 86114116.6

(22) Anmeldetag: 11.10.86

(51) Int. Cl.⁵: **B01J 49/00**

(54) Verfahren und Vorrichtung zum Rückspülen eines Festbett-Ionenaustauschers.

(30) Priorität: 13.11.85 DE 3540267

(43) Veröffentlichungstag der Anmeldung:
20.05.87 Patentblatt 87/21

(45) Bekanntmachung des Hinweises auf die Patenterteilung:
01.08.90 Patentblatt 90/31

(84) Benannte Vertragsstaaten:
AT BE CH DE ES FR GB IT LI LU NL

(56) Entgegenhaltungen:
CH-A- 486 905

(73) Patentinhaber: CILLIT Wassertechnik GmbH & Co.,
Bottwarbahnstrasse 70, D-7100 Heilbronn(DE)

(72) Erfinder: Seibel, Heinrich, Dipl.-Ing. (FH),
Eichbrunnenweg 10,
D-7101 Hardthausen-Lampoldshausen(DE)

(74) Vertreter: Wolf, Eckhard, Dr.-Ing.,
Eugensplatz 5 Postfach 13 10 01, D-7000 Stuttgart 1(DE)

## Beschreibung

Die Erfindung betrifft einen Ionenaustauscher mit mindestens einem im wesentlichen senkrecht durchströmten, aus schüttfähigem Austauscherharz bestehenden Festbett, mit einem Förder- und Reinigungsrohr zum Rückspülen des Austauscherharzes, wobei das Austauscherharz mittels einer Transport- und Spülflüssigkeit im Bereich einer zum Festbett weisenden Eintrittsöffnung kontinuierlich aus dem Festbett ansaugbar, unter Ausübung einer Reinigungswirkung kontinuierlich durch das Förder- und Reinigungsrohr transportierbar und durch mindestens eine zum Festbett weisende Austrittsöffnung kontinuierlich zum Festbett hin austragbar ist, sowie mit mindestens einem Auslaß für die mit Verunreinigungen beladene Transport- und Spülflüssigkeit.

Es ist eine Filteranlage mit einem aus Ionenaustauschermaterial bestehenden Festbett dieser Art bekannt (CH-A 486 905), bei der das Förder- und Reinigungsrohr vollständig innerhalb des Festbettes angeordnet ist und sowohl eintrittsseitig als auch austrittsseitig unmittelbar vom Festbett umgeben ist. Die Rückspülflüssigkeit wird dort in Form eines Strahls durch das Förder- und Reinigungsrohr getrieben, während Mineralpartikel aus dem Mineralbett in den Flüssigkeitsstrahl hineingebracht und darin gewaschen werden und der Flüssigkeitsstrahl samt den mitgerissenen Mineralpartikeln unterhalb der Oberfläche des Mineralbetts wieder in das Mineralbett abgegeben wird. Zu diesem Zweck ist das untere Ende des bekannten Förder- und Reinigungsrohrs im Abstand vom Boden des betreffenden Behälters angeordnet, während das obere Ende unterhalb der Oberfläche des normalerweise gesetzten Mineralbetts offen endet.

Bei dieser Anordnung besteht die Gefahr, daß durch das Rückspülwasser nach oben geschleudertes Material aus dem Mineralbett durch die oben befindliche Auslaßöffnung in den Abwasserkanal gelangt. Außerdem sammelt sich das durch das Förder- und Reinigungsrohr nach oben ausgestoßene Material in einer Zwischenschicht unterhalb der Materialoberfläche an, so daß vor allem die über dieser Zwischenschicht befindlichen Teile des Mineralbetts beim Rückspülvorgang nicht ungestört nach unten nachrücken können.

Der Erfindung liegt die Aufgabe zugrunde, den bekannten Ionenaustauscher dahingehend zu verbessern, daß die Gefahr eines Austragens von Austauscherharz beim Rückspülvorgang trotz hohen Füllstandes in der Austauscherkolonne vermieden und eine gleichmäßigere Reinigungswirkung über das gesamte Harzbett erzielt wird.

Zur Lösung dieser Aufgabe wird gemäß der Erfindung vorgeschlagen, daß das Festbett zumindest nach oben und unten durch flüssigkeitsdurchlässige Rückhalteorgane begrenzt ist, zwischen denen sich das Förder- und Reinigungsrohr erstreckt, und daß mindestens ein Auslaß außerhalb der Rückhalteorgane angeordnet ist.

Zweckmäßig ist mindestens ein Auslaß für die mit Verunreinigungen beladene Transport- und Spülflüssigkeit unterhalb des Festbetts und von dieser durch das flüssigkeitsdurchlässige Rückhalteorgan getrennt angeordnet, während ein weiterer Auslaß oberhalb des Festbetts von diesem durch die flüssigkeitsdurchlässigen Rückhalteorgane getrennt angeordnet sein kann.

Gemäß einer weiteren vorteilhaften Ausgestaltung der Erfindung ist das Austauscherharz von der Austrittsöffnung aus auf die Oberfläche des zur Eintrittsöffnung hin nachrückenden Festbetts austragbar, während eine an der Eintrittsöffnung des Förder- und Reinigungsrohrs angeordnete Kammer über das Rückhalteorgan mit Austauscherharz beschickbar ist.

Das Ansaugen des körnigen Materials kann dadurch erfolgen, daß im unteren Bereich eine zum Festbett offene Kammer, ein in die Kammer einmündender, mit der Transport- und Spülflüssigkeit beaufschlagbarer und zur Eintrittsöffnung des Förderrohrs weisender Injektor vorgesehen wird. Der Injektor besteht dabei zweckmäßig aus einer im wesentlichen senkrecht von unten her in die Kammer einmündenden Treibdüse sowie einer dieser gegenüberliegenden, an der Oberseite der Kammer angeordneten und zum Förder- und Reinigungsrohr hin divergierenden Fangdüse. Vorteilhafterweise ist die Kammer durch eine über einen trichterförmigen Siebboden des Betts mit dem körnigen Material beschickbare, von der Treibdüse durchdrungene Bodenmulde sowie ein die Bodenmulde kuppelartig übergreifendes, die Fangdüse aufweisendes Deckelteil begrenzt.

Das zweckmäßig senkrecht und mittig durch das Festbett hindurchgreifende Förder- und Reinigungsrohr ist nach oben hin vorteilhafterweise durch eine zum Bett offene Austrittskammer begrenzt, deren Deckelteil mit einem siebartigen Rückhalteorgan des Betts verbunden ist.

Die Ansaugvorrichtung saugt also beim Rückspülvorgang die Harzteilchen des Festbettes Schicht für Schicht unten ab und transportiert sie nach oben. Somit erfolgt innerhalb kurzer Zeit eine Umwälzung des gesamten Harzbettes innerhalb der Austauschersäule. Bei der Umwälzung wird das gesamte Harz Korn für Korn gereinigt, dabei aufgelockert und von Verunreinigungen und Harzabrieb befreit.

Durch die sehr hohe Strömungsgeschwindigkeit des Wasser-Teilchen-Gemisches im Bereich des Injektors und des Förder- und Reinigungsrohrs findet eine gegenüber herkömmlichen Verfahren intensivere Teilchenreinigung statt, ohne daß dabei die einzelnen Körner in ihrer Beschaffenheit geschädigt werden. Ein weiterer Vorteil dieser intensiven Rückspülung ist in der Keimreduzierung und der dadurch bedingten Verbesserung der hygienischen Eigenschaften des behandelten Wassers zu sehen.

Außerdem werden die erforderliche Spülwassermenge und die Regenerations- und Rückspülzeit erheblich reduziert. Durch die Einsparung an Rückspülraum erhält man eine kompakte und kostengünstige Bauweise ohne bewegliche und verschleißende Teile.

Im folgenden wird die Erfindung anhand eines bevorzugten Ausführungsbeispiels näher erläutert. Es zeigen

Fig. 1 bis 3 einen senkrechten Schnitt durch eine Ionenaustauscheranlage mit zwei Austauschersäulen in verschiedenen Betriebszuständen;

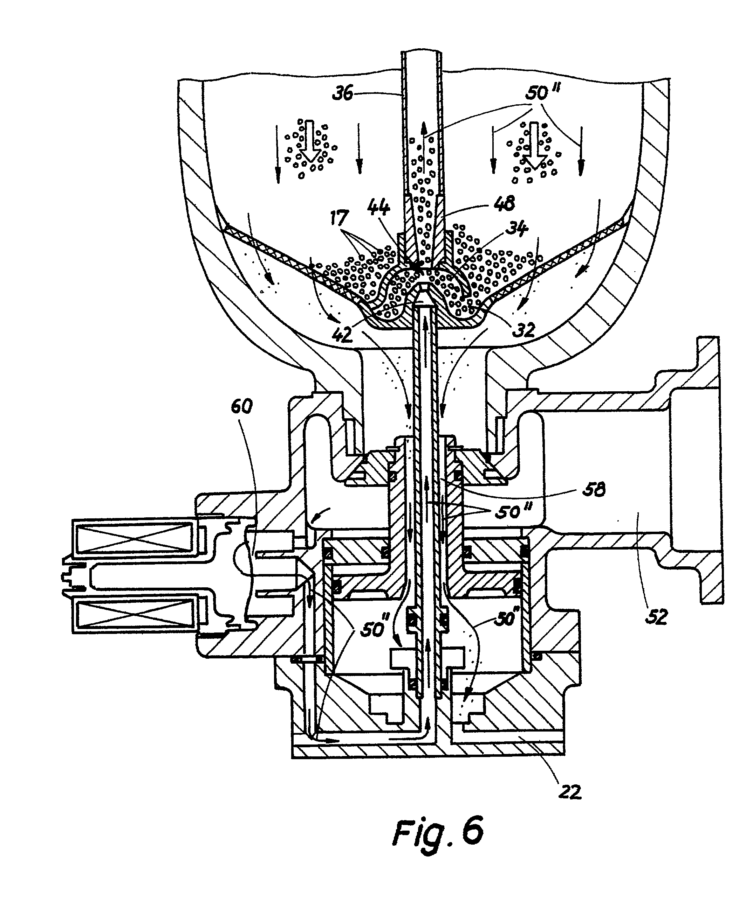

Fig. 4 bis 6 einen Ausschnitt aus dem linken Austauscherbehälter nach Fig. 1 bis 3 in vergrößerter Darstellung.

Der in der Zeichnung dargestellte, als Doppelanlage ausgebildete Ionenaustauscher ist vorzugsweise für die Wasserenthärtung bestimmt. Die beiden im wesentlichen zylindrischen Austauschersäulen 10,10' enthalten ein nach oben und unten durch flüssigkeitsdurchlässige Rückhalteorgane 12,14 begrenztes Festbett 16 aus körnigem Austauscherharz 17, das in der Betriebsphase im Aufstrom und in der Regenerationsphase im Abstrom durchströmt wird (Aufstrom-Gegenstrom-Verfahren).

Das Harzbett 16 liegt unten auf einem trichterförmigen Sieb- oder Filterboden 14 auf und ist über diesen hydraulisch mit einer darunter befindlichen Verteilerkammer 18 verbunden, die ihrerseits über geeignete Armaturen wahlweise mit der Hartwasserzuleitung 20 und dem Abwasserkanal 22 verbindbar ist. Im Bereich der Oberkante steht das Harzbett 16 über eine Sammlerkammer 24 und geeignete Armaturen wahlweise mit dem Weichwasserauslaß 26, dem Regeneriermitteleinlaß 28 und dem Spülmittelauslaß 28' in Verbindung.

In jeder Austauschersäule ist eine Rückspülvorrichtung 30 integriert, die im wesentlichen aus einer im Bodenbereich des Bettes 16 angeordneten, über den trichterförmigen Siebboden 14 durch mindestens eine seitliche Öffnung 32 hindurch mit dem Harz 17 beschickbaren Ansaugkammer 34, einem von der Ansaugkammer 34 aus das Harzbett 16 axial durchdringenden Förder- und Reinigungsrohr 36 und einer am oberen Ende des Rohrs 36 angeordneten, zur Oberseite des Harzbetts 16 offenen Austrittskammer 38 besteht. Die Ansaugkammer 34 weist eine ringförmige Bodenmulde 40 auf, durch die axial von unten die Treibdüse 42 eines Injektors 44 eingreift. Nach oben hin ist die Ansaugkammer 34 durch einen kuppelförmigen Deckel 46 begrenzt, der die nach oben divergierende und mit dem Rohr 36 verbundene Fangdüse 48 des Injektors 44 aufweist.

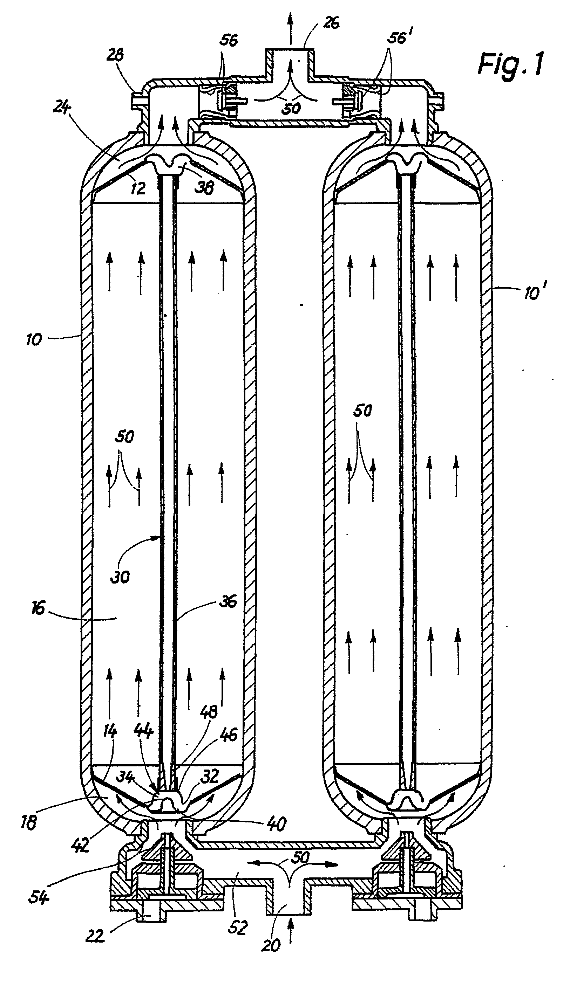

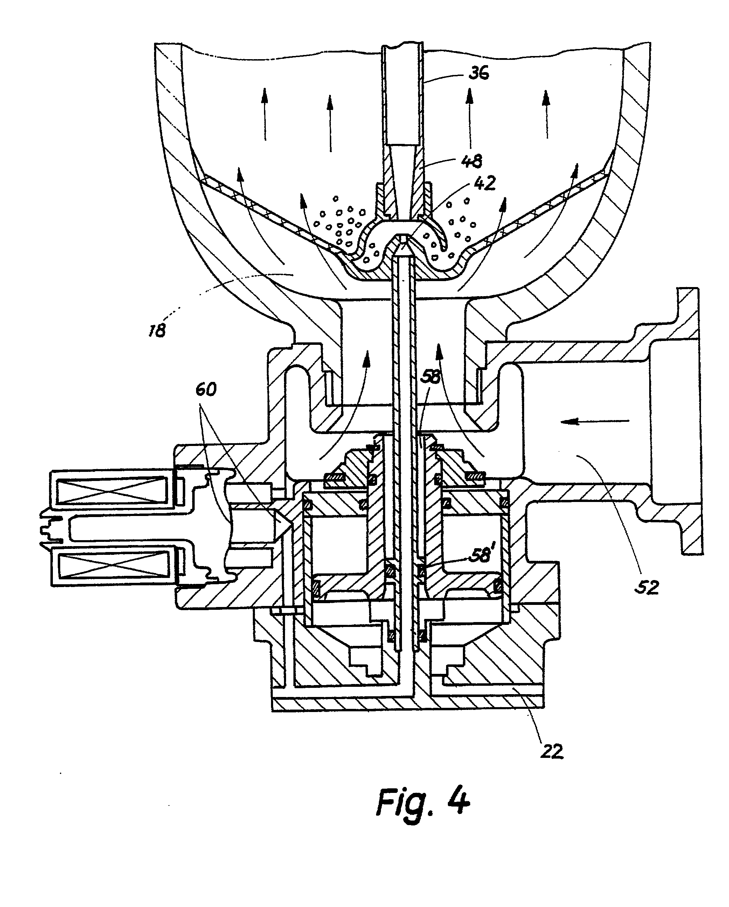

In dem in Fig. 1 und 4 durch Strömungspfeile 50 angedeuteten Betriebszustand in den beiden Säulen 10,10' wird über den Stutzen 20, die Zuleitung 52 und das offene Ventil 54 von unten her das zu behandelnde Hartwasser über die Verteilerkammer 18 und den Siebboden 14 dem Harzbett 16 zugeführt. Dort wird es im Aufstrom durch das Bett 16 geleitet und gelangt schließlich über das obere Rückhalteorgan 12 in die Sammlerkammer 24, von wo aus es über das jeweilige Rückschlagventil 56,56' zum Weichwasserauslaß 26 geleitet wird. Wie insbesondere aus Fig. 4 zu ersehen ist, ist in diesem Zustand der Durchgang von der Verteilerkammer 18 über den Ventilkanal 58 zum Abwasserkanal durch den Ventilkörper 58' geschlossen. Ebenso ist der Durchgang vom Hartwasserkanal 52 zur Treibdüse 42 über das Membranventil 60 gesperrt.

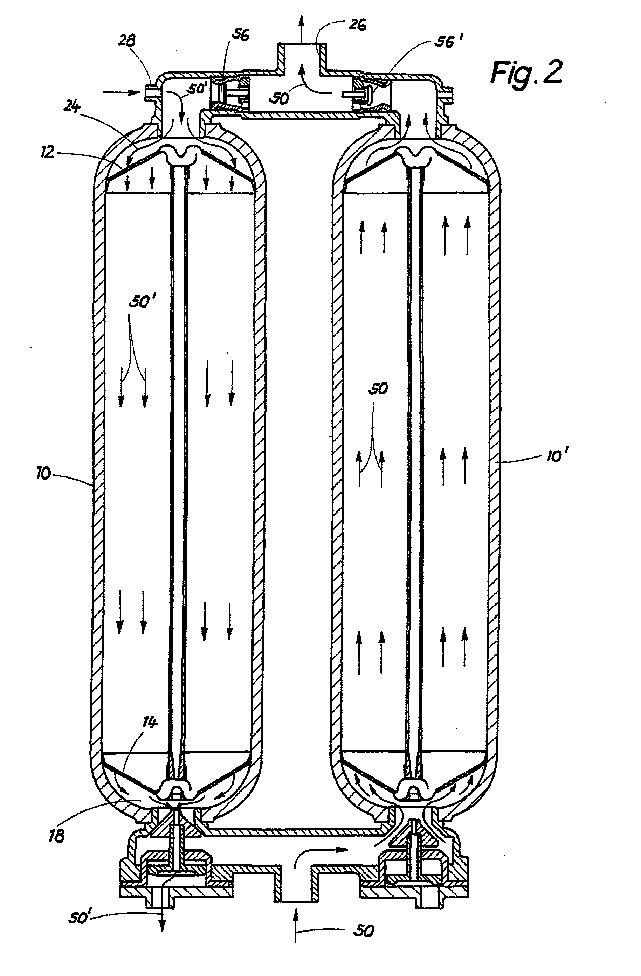

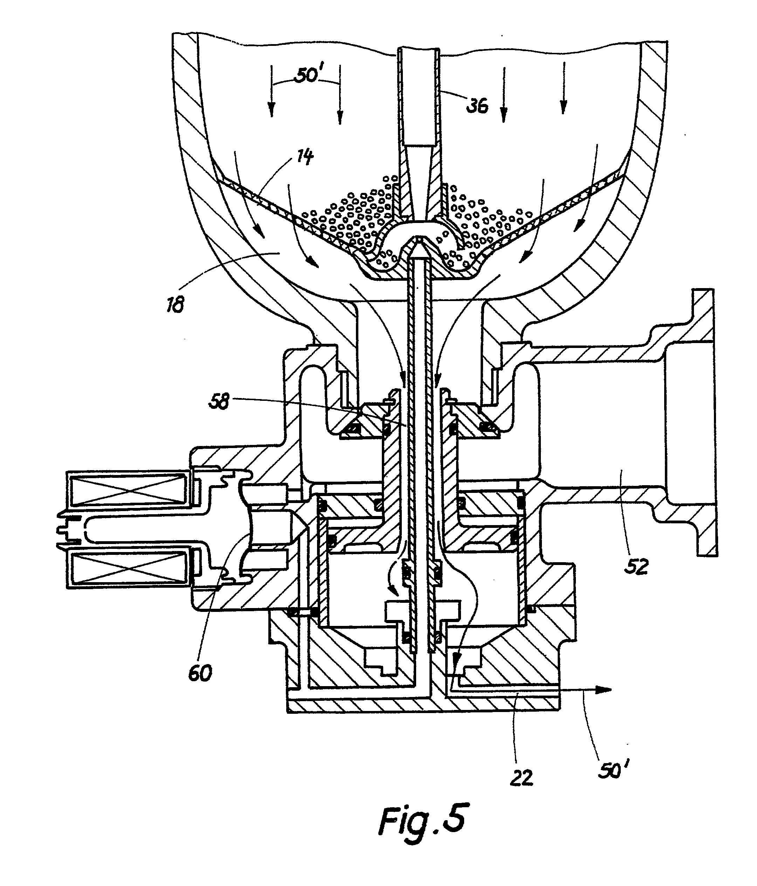

Beim Regenerationsvorgang (Fig. 2, linke Säule und Fig. 5) wird das Harzbett 16 über den Stutzen 28, den Sammler 24 und das obere Rückhalteorgan 12 mit einem Regeneriermittel, beispielsweise Kochsalzlösung, beaufschlagt. Das Regeneriermittel strömt in Richtung der Pfeile 50' von oben nach unten durch das Harzbett 16 und gelangt über das Bodensieb 14 und die Verteilerkammer 18 zu dem nunmehr offenen Ringkanal 58 des Ventils 58', der mit dem Abwasserkanal 22 verbunden ist. Wie aus Fig. 2 zu ersehen ist, werden die beiden Austauschersäulen 10,10' der Doppelanlage nicht gleichzeitig, sondern nacheinander regeneriert, so daß immer eine Säule 10' im Betriebszustand arbeitet und jederzeit Weichwasser über den Stutzen 26 entnommen werden kann. Der erwünschte Flüssigkeitsstrom 50 bis 50' stellt sich dabei im oberen Bereich automatisch über die Rückschlagventile 56,56' ein.

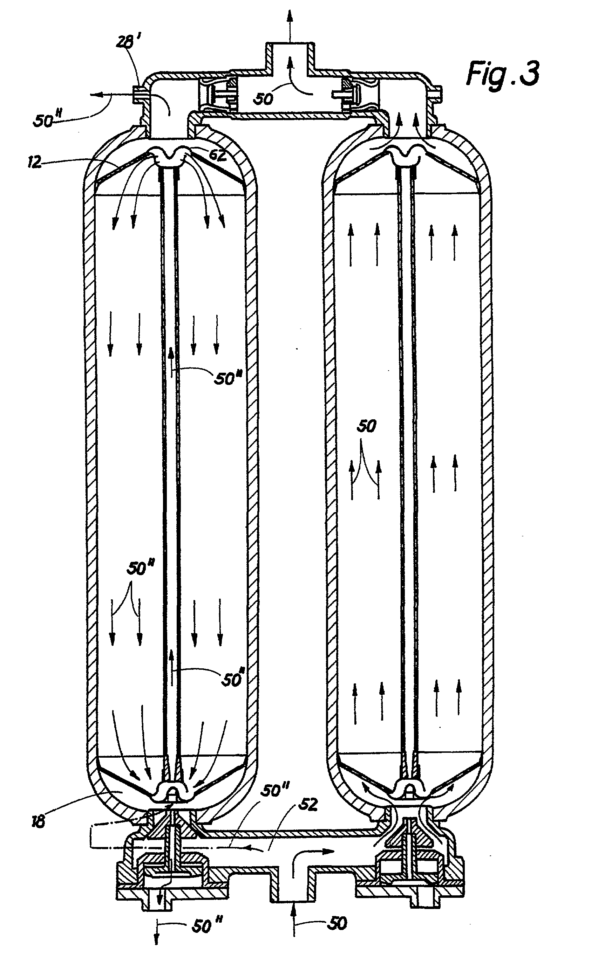

Entsprechendes gilt auch für das Rückspülen und Auswaschen des Harzmaterials, das zweckmäßig im Anschluß an den Regeneriervorgang durchgeführt wird. Dieser Zustand ist in den Fig. 3 (linke Säule) und 6 durch entsprechende Strömungspfeile 50" angedeutet. Hierbei ist über das Membranventil 60 der Durchtritt vom Hartwasserkanal 52 zum Injektor 44 geöffnet. Das an der Treibdüse 42 mit hoher Geschwindigkeit austretende Transport- und Spülwasser gelangt durch die Kammer 34 zur gegenüberliegenden Fangdüse 48 und erzeugt dabei einen Unterdruck, über den Austauschharz 17 aus dem von oben nach unten nachrückenden Harzbett 16 kontinuierlich angesaugt wird. Die Harzteilchen 17 werden im Förder- und Reinigungsrohr 36 durcheinandergewirbelt und dadurch einem mechanischem Schmutzabtrag ausgesetzt. An seinem oberen Ende mündet das Förder- und Reinigungsrohr 36 in eine Austrittskammer 38, von der aus das aufgelockerte Harz 17 mit dem Wasser über mehrere Öffnungen 62 von oben auf das Festbett 16 ausgetragen wird. Das mit Verunreinigungen beladene Transport- und Spülwasser wird einmal durch das obere siebartige Rückhalteorgan 12 hindurch über den Stutzen 28' abgezogen.

Ein anderer Teil des Spülwassers gelangt durch das Harzbett 16 nach unten und wird dort in der Verteilerkammer 18 aufgefangen und durch den Ventilkanal 58 zum Abwasserkanal 22 geleitet.

Versuche haben gezeigt, daß eine einmalige Umwälzung für eine wirksame Auswaschung des Filterbetts 16 genügt. Dadurch kann die Rückspüldauer relativ kurz gehalten werden. So wurde bei einer Wasserenthärtungsanlage mit einem Bettraum von ca. 3 Liter für das Regenerieren, Auswaschen und Rückspülen eine Zeit von weniger als 10 Minuten benötigt, wovon nur etwa 2 Minuten auf den Umwälz-Rückspülvorgang entfielen.

## Patentansprüche

1. Ionenaustauscher mit mindestens einem im wesentlichen senkrecht durchströmten, aus schüttfähigem Austauscherharz bestehenden Festbett, mit einem Förder- und Reinigungsrohr zum Rückspülen des Austauscherharzes, wobei das Austauscherharz mittels einer Transport- und Spülflüssigkeit im Bereich einer zum Festbett weisenden Eintrittsöffnung kontinuierlich aus dem Festbett ansaugbar, unter Ausübung einer Reinigungswirkung kontinuierlich durch das Förder- und Reinigungsrohr transportierbar und durch mindestens eine zum Festbett weisende Austrittsöffnung kontinuierlich zum Festbett hin austragbar ist, sowie mit mindestens einem Auslaß für die mit Verunreinigungen beladene Transport- und Spülflüssigkeit, dadurch gekennzeichnet, daß das Festbett (16) zumindest nach oben und nach unten durch flüssigkeitsdurchlässige Rückhalteorgane (12, 14) begrenzt ist, daß sich das Förder- und Reinigungsrohr (36) zwischen den oberen und unteren Rückhalteorganen (12, 14) erstreckt, und daß mindestens ein Auslaß (22, 28') außerhalb der Rückhalteorgane (12, 14) angeordnet ist.

2. Ionenaustauscher nach Anspruch 1, dadurch gekennzeichnet, daß mindestens ein Auslaß (22) für die mit Verunreinigungen beladene Transport- und Spülflüssigkeit (50") unterhalb des Festbetts (16) und von diesem durch das flüssigkeitsdurchlässige Rückhalteorgan (14) getrennt angeordnet ist.

3. Ionenaustauscher nach Anspruch 1 oder 2, dadurch gekennzeichnet, daß mindestens ein Auslaß (22, 28') für die mit Verunreinigungen beladene Transport- und Spülflüssigkeit (50") unterhalb und oberhalb des Festbetts (16) und von diesem durch die flüssigkeitsdurchlässigen Rückhalteorgane (12, 14) getrennt angeordnet ist.

4. Ionenaustauscher nach einem der Ansprüche 1 bis 3, dadurch gekennzeichnet, daß das Austauscherharz (17) von der Austrittsöffnung aus auf die Oberfläche des zur Eintrittsöffnung hin nachrückenden Festbetts (16) austragbar ist.

5. Ionenaustauscher nach einem der Ansprüche 1 bis 4, dadurch gekennzeichnet, daß eine an der Eintrittsöffnung des Förder- und Reinigungsrohrs (36) angeordnete Kammer (34) über das Rückhalteorgan (14) mit Austauscherharz (17) beschickbar ist.

6. Ionenaustauscher nach Anspruch 5, dadurch gekennzeichnet, daß die im Bereich der Eintrittsöffnung des Förder- und Reinigungsrohrs (36) angeordnete und mindestens eine Öffnung (32) zum Festbett (16) hin aufweisende Kammer (34) einen in die Kammer (34) einmündenden, mit der Transport- und Spülflüssigkeit (50") beaufschlagbaren und zur Eintrittsöffnung des Förder- und Reinigungsrohrs (36) weisenden Injektor (44) aufweist.

7. Ionenaustauscher nach Anspruch 6, dadurch gekennzeichnet, daß der Injektor (44) eine im wesentlichen senkrecht von unten her in die Kammer (34) einmündende Treibdüse (42) sowie eine dieser gegenüberliegende, an der Oberseite der Kammer (34) angeordnete, zum Förderrohr (36) hin divergierende Fangdüse (48) aufweist.

8. Ionenaustauscher nach einem der Ansprüche 1 bis 7, dadurch gekennzeichnet, daß das Förderrohr (36) senkrecht und mittig durch das Festbett (16) hindurchgreift.

9. Ionenaustauscher nach Anspruch 7 oder 8, dadurch gekennzeichnet, daß die Kammer (34) durch eine über einen trichterförmigen Siebboden (14) des Festbetts (16) mit dem Austauscherharz (17) beschickbare, von der Treibdüse (42) durchdrungene Bodenmulde (40) sowie ein die Bodenmulde (40) kuppelartig übergreifendes, die Fangdüse (48) aufweisendes Deckelteil (46) begrenzt ist.

10. Ionenaustauscher nach Anspruch 9, dadurch gekennzeichnet, daß die Kammer (34) mindestens eine vom Siebboden (14) zur Bodenmulde (40) führende Eintrittsöffnung (32) aufweist.

11. Ionenaustauscher nach Anspruch 9 oder 10, dadurch gekennzeichnet, daß die Treibdüse (42) in das Innere der Kammer (34) eingreift und von der Bodenmulde (40) ringförmig umgeben ist.

12. Ionenaustauscher nach einem der Ansprüche 1 bis 11, dadurch gekennzeichnet, daß das Förder- und Reinigungsrohr (36) nach oben hin durch eine zum Festbett (16) offene Austrittskammer (38) begrenzt ist, deren Deckelteil mit dem Rückhalteorgan (12) des Festbetts (16) verbunden ist.

13. Ionenaustauscher nach einem der Ansprüche 1 bis 12, dadurch gekennzeichnet, daß zwei im Betriebszustand parallel durchströmbare, je eine Rückspülvorrichtung enthaltende, unabhängig voneinander rückspülbare, ein Festbett enthaltende Austauschersäulen vorgesehen sind.

## Claims

1. An ion exchanger with at least one substantially perpendicularly flowed through solid bed of free-flowing exchanger resin, with a conveying and cleansing pipe for backwashing of the exchanger resin, wherein the exchanger resin can be continuously sucked in by means of a transport and washing liquid in the area of an inlet opening facing towards the solid bed, is continuously transportable by means of the conveying and cleansing pipe whilst having a cleansing effect, and can be continuously discharged towards the solid bed by means of at least one outlet opening facing towards the solid bed, as well with at least one outlet for the transport and washing liquid loaded with impurities, characterised in that the solid bed (16) is defined, at least towards the top and bottom, by liquid-permeable retention means (12, 14), that the conveying and cleansing pipe (36) extends between the upper and lower retention means (12, 14), and that at least one outlet (22, 28') is arranged outside the retention means (12, 14).

2. An ion exchanger according to claim 1, characterised in that at least one outlet (22) for the transport and washing liquid (50") loaded with impurities is arranged underneath the solid bed (16) and separated from same by way of the liquid-permeable retention means (14).

3. An ion exchanger according to claim 1 or 2, characterised in that at least one outlet (22, 28') for the transport and washing liquid loaded with impurities (50") is arranged underneath and above the solid bed (16) and separated from same by the liquid-permeable retention means (12, 14).

4. An ion exchanger according to one of the claims 1 to 3, characterised in that the exchanger resin (17) can be discharged from the outlet opening onto the top surface of the solid bed (16) which follows in the direction of the inlet opening.

5. An ion exchanger according to one of the claims 1 to 4, characterised in that a chamber (34), arranged at the inlet opening of the conveying and cleansing pipe (36), can be loaded with exchanger resin (17) via the retention means (14).

6. An ion exchanger according to claim 5, characterised in that the chamber (34), arranged in the area of the inlet opening of the conveying and cleansing pipe (36) and with at least one opening (32) towards the solid bed (16), has an injector (14), terminating in the chamber (34) and loadable with the conveying and washing liquid (50″) and facing towards the inlet opening of the conveying and cleansing pipe (36).

7. An ion exchanger according to claim 6, characterised in that the injector (44) has a drive jet (42), entering the chamber (34) substantially vertically from underneath, as well as opposite thereto a collector nozzle (48), arranged at the top of the chamber (34), diverging towards the conveying pipe (36).

8. An ion exchanger according to one of the claims 1 to 7, characterised in that the conveying pipe (36) reaches vertically and centrally through the solid bed (16).

9. An ion exchanger according to claim 7 or 8, characterised in that the chamber (34) is defined by a bottom tray (40) which is loadable with the exchanger resin (17) via a funnel-shaped sieve bottom (14) of the solid bed (16) and penetrated by the drive jet (42), as well as a cover (46) which extends dome-shaped over the bottom tray (40) and includes the collector nozzle (48).

10. An ion exchanger according to claim 9, characterised in that the chamber (34) has at least one inlet opening (32) leading from the sieve bottom (14) to the bottom tray (40).

11. An ion exchanger according to claim 9 or 10, characterised in that the drive jet (42) enters into the inside of the chamber (34) and is circularly encapsuled by the bottom tray (40).

12. An ion exchanger according to one of the claims 1 to 11, characterised in that the conveying and cleansing pipe (36) is defined upwards by an outlet chamber (38) which is open towards the solid bed (16), the cover means of which is connected with the retention means (12) of the solid bed (16).

13. An ion exchanger according to one of the claims 1 to 12, characterised in that provision is made for two exchanger columns which in the operational state can be flowed-through in parallel, which each have a backwashing device, which are backwashable independent from each other and which contain a solid bed.

**Revendications**

1. Echangeur d'ions comprenant au moins un lit fixe qui, constitué par de la résine échangeuse susceptible d'être déversée, est parcouru sensiblement verticalement par un fluide, un tube transporteur et de nettoyage pour rincer en retour de la résine échangeuse, la résine échangeuse pouvant être aspirée en continu à partir du lit fixe, au moyen d'un liquide transporteur et de rinçage, au niveau d'une ouverture d'entrée orientée en direction du lit fixe, transportée en continu à travers le tube transporteur et de nettoyage en exerçant une action de nettoyage, et déchargée en continu en direction du lit fixe en passant par au moins une ouverture de sortie orientée en direction du lit fixe, ainsi qu'au moins une sortie pour le liquide transporteur et de rinçage chargé d'impuretés, caractérisé en ce que le lit fixe (16) est limité au moins vers le haut et vers le bas par des organes de retenue (12, 14) perméables au liquide, en ce que le tube transporteur et de nettoyage (36) s'étend entre les organes de retenue supérieur (12) et inférieur (14), et en ce qu'au moins une sortie (22, 28′) est disposée à l'extérieur des organes de retenue (12, 14).

2. Echangeur d'ions selon la revendication 1, caraotérisé en ce qu'au moins une sortie (22) pour le liquide transporteur et de rinçage (50″) chargé d'impuretés est disposée au-dessous du lit fixe (16) et est séparée de celui-ci par l'organe de retenue (14) perméable au liquide.

3. Echangeur d'ions selon la revendication 1 ou 2, caractérisé en ce qu'au moins une sortie (22, 28′) pour le liquide transporteur et de rinçage (50″) câargé d'impuretés est disposée respectivement au-dessous ou au-dessus du lit fixe (16) et est séparée de ce dernier par les organes de retenue (12, 14) perméables au liquide.

4. Echangeur d'ions selon l'une quelconque des revendications précédentes, caractérisé en ce que la résine échangeuse (17) peut être déchargée de l'ouverture de sortie sur la surface du lit fixe (16) glissant au fur et à mesure vers l'ouverture d'entrée.

5. Echangeur d'ions selon l'une quelconque des revendications précédentes, caractérisé en ce qu'une chambre (34) disposée au niveau de l'ouverture d'entrée du tube transporteur et de nettoyage (36) peut être chargée de résine échangeuse (17) par l'intermédiaire de l'organe de retenue (14).

6. Echangeur d'ions selon la revendication 5, caractérisé en ce que la chambre (34) disposée au niveau de l'ouverture d'entrée du tube transporteur et de nettoyage (36) et présentant au moins une ouverture (32) orientée vers le lit fixe (16) présente un injecteur (44) qui, débouchant dans la chambre (34), peut être alimenté avec le liquide transporteur et de rinçage (50″) et est dirigé vers l'ouverture d'entrée du tube transporteur et de nettoyage (36).

7. Echangeur d'ions selon la revendication 6, caractérisé en ce que l'injecteur (44) comporte une buse propulsive (42) débouchant sensiblement verticalement d'en bas dans la chambre (34) ainsi qu'une buse interceptrice (48) qui, opposée à la buse propulsive et montée sur le dessus de la chambre (34), diverge en direction du tube transporteur (36).

8. Echangeur d'ions selon l'une quelconque des revendications précédentes, caractérisé en ce que le tube transporteur (36) s'étend verticalement et centralement à travers le lit fixe (16).

9. Echangeur d'ions selon la revendication 7 ou 8, caractérisé en ce que la chambre (34) est limitée par une auge de fond (40) qui peut être alimentée avec la résine échangeuse (17) à travers un fond perforé (14) en forme d'entonnoir du lit fixe (16) et à travers laquelle passe la buse propulsive (42), ainsi que par une partie formant couvercle (46) recouvrant en forme de dôme l'auge de fond (40) et comportant la buse interceptrice (48).

10. Echangeur d'ions selon la revendication 9, caractérisé en ce que la chambre (34) présente au moins une ouverture d'entrée (32) conduisant du fond perforé (14) à l'auge de fond (40).

11. Echangeur d'ions selon la revendication 9 ou 10, caractérisé en ce que la buse propulsive (42) s'engage à l'intérieur de la chambre (34) et est entourée en forme d'anneau par l'auge de fond (40).

12. Echangeur d'ions selon l'une quelconque des revendications précédentes, caractérisé en ce que le tube transporteur et de nettoyage (36) est limité du côté supérieur par une chambre de sortie (38) ouverte en direction du lit fixe (16) et dont la partie formant couvercle est reliée à l'organe de retenue (12) du lit fixe (16).

13. Echangeur d'ions selon l'une quelconque des revendications précédentes, caractérisé en ce qu'il est prévu deux colonnes échangeuses qui, parcourues en parallèle par un liquide à l'état de fonctionnement et contenant chacune un dispositif de rinçage en retour, peuvent être rincées en retour indépendamment l'une de l'autre et contiennent chacune un lit fixe.

*Fig.1*

Fig.2

Fig.3

Fig. 4

Fig.5

Fig. 6